# EUROPEAN PATENT APPLICATION

(11) **EP 3 462 229 A1**
(43) Date of publication of application: **03.04.2019**
(21) Application number: 17194341.8
(22) Date of filing: 02.10.2017
(51) Int. Cl.: G02C 5/14, G02C 5/22

(54) **EYEGLASSES**

(71) Applicant: Ørgreen Optics A/S, 1127 Copenhagen K (DK)
(72) Inventor: Wandrup, Tobias, 2300 Copenhagen S (DK); Ørgreen, Henrik, 1054 Copenhagen K (DK)
(74) Representative: Inspicos P/S

(57) **Abstract**

The present invention provides eyeglasses comprising at least one elongated temple extending from a front end to a rear end and forming an attachment structure at the front end, and an eyeglass frame forming at least one receiving cavity and a slot extending into the cavity thereby forming an opening. The slot is configured to guide the attachment structure into the cavity. An inner surface of the cavity and an outer surface of the attachment structure are shaped to establish a geometrical locking forming a hinge-like structure allowing rotation of the attachment structure only about a single axis of rotation in the cavity.

## Description

### Field of the invention

The present invention relates to eyeglasses comprising at least one temple and a frame. Furthermore, the invention relates to a method of assembling eyeglasses.

### Background of the invention

Traditionally, eyeglasses comprising a frame and a pair of temples are assembled by use of screws, wires, magnets, glues, and the like. This makes the assembling process cumbersome, and requires a number of different parts and tools.

### Description of the invention

It is an object of embodiments of the invention to provide improved eyeglasses and an improved method of assembling eyeglasses.

It is a further object of embodiments of the invention to provide eyeglasses decreasing the number of elements necessary to assemble the eyeglasses.

It is an even further object of embodiments of the invention to provide eyeglasses which can be assembled without the use of screws and without the use of tools.

According to a first aspect, the invention provides eyeglasses comprising:
- at least one elongated temple extending from a front end to a rear end and forming an attachment structure at the front end, and
- an eyeglass frame forming at least one receiving cavity and a slot extending into the cavity thereby forming an opening;
wherein the slot is configured to guide the attachment structure into the cavity, and wherein an inner surface of the cavity and an outer surface of the attachment structure are shaped to establish a geometrical locking forming a hinge-like structure allowing rotation of the attachment structure only about a single axis of rotation in the cavity.

Accordingly, the eyeglasses provide a hinge-like structure by a geometrical locking between the attachment structure and the cavity, and further provide an easy and precise way of arranging the geometrically locking surfaces correctly relative to each other by guiding the attachment structure via the slot into the cavity. By these features, it is possible to assemble the eyeglasses without the use of tools. Furthermore, the eyeglasses may be assembled without the use of screws, wires, magnet, glue, and the like.

Additionally, the slot may ensure that the temple does not keel over when inserting the attachment structure into the cavity via the slot. Thus, it may be ensured that the temple is attached to the frame at the correct angle.

It should be understood, that the hinge-like structure may comprise one or more elements in addition to the attachment structure and the cavity.

It should further be understood, that the geometrical locking does not prevent subsequent removal of the temple, as the geometrical locking is not irreversible.

In an embodiment, the frame may comprise two receiving cavities and associated slots to allow mounting of two temples.

It should be understood, that the cavity may be fully closed at the rear end of the cavity; i.e. opposite to the opening. However, the cavity may in one embodiment comprise one or more additional openings located in the area of the rear end of the cavity or at the rear end of the cavity. Consequently, it may be possible to get a view of the attachment structure from the outside of the frame, when the attachment structure is inserted into the cavity.

It should further be understood, that the additional opening(s) may be of a size which ensure that the attachment structure cannot be removed from the cavity via the additional opening(s).

The size of the cavity; i.e. the distance from the opening to the oppositely located rear end of the cavity may be in the range of 6-12 mm, such as in the range of 8-10 mm.

The eyeglass frame may form a front surface facing away from the face of a wearer of the eyeglasses and a rear surface facing towards the wearer.

The eyeglass frame may be made of a plastic material, such as polyamide or a similar flexible and lightweight material.

In order to hide the slot or at least make it less visible, when the eyeglasses are in use, the slot may be arranged at the rear surface of the frame. In one embodiment, the additional opening(s) may be located at the front surface of the frame.

The opening into the slot may be arranged at an edge of an outer side of the frame or alternatively at an inner surface of the frame. In the context of the present invention, the inner surface of the frame should be understood as the lens side of the frame; i.e. the side at which a lens can be mounted.

The eyeglasses comprise at least one elongated temple extending from a front end to a rear end. In an embodiment, the eyeglasses may comprise two temples. The temples may be identically or may be differently shaped, e.g. dependent on whether they are to be mounted at the left or the right side of the frame, respectively.

In the context of the present invention, the term "elongated temple" should be understood as a temple extending in a longitudinal direction from a front end to the rear end, where the longitudinal direction is the largest dimension of the temple. The elongated temple may be a straight element or may comprise one or more bend portions.

The temple may be configured to support the eyeglasses at an ear of a wearer at the rear end of the temple. This may as an example be achieved by bending the temple at the rear end, by forming the temple of a different material at the rear end, by adding a different material at the rear end, or by other means. It should however, be understood that the rear end of the temple need not be processed as an unprocessed rear end may also support the eyeglasses at an ear of a wearer.

The temple(s) may be made of titanium or a similar strong and lightweight material thereby providing lightweight eyeglasses.

To facilitate folding of the eyeglasses when not in use, the axis of rotation may be substantially perpendicular to the slot.

The attachment structure may be symmetrical around at least one axis. This axis may be the axis of rotation. Additionally or alternatively, the attachment structure may be symmetrical around another axis, e.g. an axis perpendicular to the axis of rotation.

The outer surface of the attachment structure may be an uninterrupted surface. In the context of the present invention, the term "uninterrupted surface" should be understood as a surface without openings, e.g. openings provided for a screw or a wire. The uninterrupted surface may however form one or more indentations and/or protrusions.

In one embodiment, the attachment structure may be solid. The attachment structure may be made of metal. To provide lightweight eyeglasses, the attachment structure may be made of titanium or other similar materials. It should be understood, that the temple and the attachment structure may be formed in one piece. Alternatively, the attachment structure may be formed as a separate part which is subsequently attached to the temple.

To further facilitate insertion of the attachment structure into the cavity via the slot, and thereby facilitate attachment of the temple to the frame, the attachment structure may extend between an upper surface and a lower surface, where the upper surface and the lower surface are substantially plane. In one embodiment, the upper and lower surfaces may be substantially parallel which may facilitate correct positioning of the attachment structure relative to the opening into the slot, as the upper surface and the lower surface may thereby be orientated relative to corresponding inner surfaces of the cavity.

The upper surface and the lower surface may be connected by an attachment surface which may be of an arbitrary shape, such as arch-shaped, straight, or being formed by a plurality of straight surfaces, a plurality of arch-shaped surfaces, or being formed by a combination hereof.

Thus, the attachment structure may form different shapes, such as a tube-shape, a barrel-shape, a sphere-shape, a sphere-like shape with a plane upper and lower surface, or other shapes.

The size of the attachment structure may be in the range of 2-7 mm, such as in the range of 3-6 mm, such as in the range of 4-5 mm, where the size should be understood as the length/diameter of the larges dimension of the attachment structure.

The eyeglasses may further comprising a dampening element insertable into the cavity to thereby dampen movement of the temple relative to the frame by contact between the dampening element and the frame and by contact between the dampening element and the attachment structure. In one embodiment, dampening may be facilitated by inserting the dampening element into the cavity before inserting the attachment structure into the cavity whereby the dampening structure may be positioned between the rear end of the cavity and the attachment structure.

The size of the attachment structure may be in the range of 1-5 mm, such as in the range of 2-4 mm, where the size should be understood as the length/diameter of the larges dimension of the dampening element.

To facilitate dampening of movement of the temple relative to the frame, the dampening element may be elastically deformable, where dampening of movement of the temple relative to the frame may be caused by elastic deformation of the dampening element.

The dampening element may be made from rubber or a similar elastic deformable material. The dampening element may form different shapes, such as a tube-shape, a barrel-shape, a sphere-shape, a sphere-like shape with a plane upper and lower surface, or other shapes.

In one embodiment, a size of the dampening element may be less than 75 percent than a size of the attachment structure, where the size should be understood as the length/diameter of the larges dimension of the dampening element and the attachment structure.

The eyeglasses may further comprise a locking element insertable into the slot to close the opening. When inserting the locking element into the slot and thereby closing the opening, unwanted separation of the temple and the frame may be achieved. It should be understood, that the locking element does not prevent subsequent removal of the temple, as the locking element may be removed from the slot thereby allowing subsequent removal of the temple.

In one embodiment, the locking element may form an indentation configured for engagement with the attachment structure. As an example, a shape of the indentation may match a shape of the attachment surface. However, the shape of the indentation may alternatively match another part of the attachment structure.

In one embodiment, at least a part of an outer surface of the locking element may match a part of the inner surface of the cavity to allow fixing of the locking element by frictional forces. The locking element may be press-fitted into the cavity.

The indentation may be formed at a front end of the locking element; i.e. the end which is inserted into the slot as the first part. At the rear end, the locking element may have a form which matches an edge part of the frame, whereby the locking element may ensure a smooth edge part when inserted into the slot.

The eyeglasses may further comprise at least one lens. In one embodiment, the lens may prevent removal of the temple, when inserted into the frame. The lens may be inserted into a groove extending at least partly along the inner surface of the frame, i.e. the lens side of the frame. The lens may be mounted without the use of tools, screws, glue, and the like, as it may be kept in place by the edges of the groove which may match the size and shape of the lens.

In one embodiment, the groove may extend along the entire inner surface of the frame.

It should be understood, that the lens may additionally prevent removal of one or more of the locking element, the dampening element, and/or other parts of the eyeglasses.

Alternatively or additionally, the frame may comprise one or more sets of protrusions between which the lens may be attached to the frame. Other means of attaching the at least one lens to the frame may also be used.

According to a second aspect, the invention provides a method of assembling eyeglasses according to the first aspect of the invention, the method comprising the steps of:
- providing at least one elongated temple extending from a front end to a rear end and forming an attachment structure at the front end,
- providing an eyeglass frame forming at least one receiving cavity and a slot extending into the cavity thereby forming an opening,
- inserting the attachment structure in the cavity through the slot,
- guiding the attachment structure via the slot into the cavity, and
- establishing a geometrical locking forming a hinge-like structure between an inner surface of the cavity and an outer surface of the attachment structure to allow rotation of the attachment structure only about a single axis of rotation in the cavity.

It should be understood, that a skilled person would readily recognise that any feature described in combination with the first aspect of the invention could also be combined with the second aspect of the invention, and vice versa.

The eyeglasses according to the first aspect of the invention are very suitable for performing the method steps according to the second aspect of the invention. The remarks set forth above in relation to the eyeglasses are therefore equally applicable in relation to the method.

According to a third aspect, the invention provides a method of assembling eyeglasses, the method comprising the steps of:
- providing at least one elongated temple extending from a front end to a rear end and forming an attachment structure at the front end,
- providing an eyeglass frame forming at least one receiving cavity and a slot extending into the cavity thereby forming an opening,
- providing at least one lens,
- guiding the attachment structure via the slot into the cavity, and
- attaching the lens to the frame so that the lens prevents removal of the temple from the frame.

It should be understood, that a skilled person would readily recognise that any feature described in combination with the first aspect of the invention could also be combined with the third aspect of the invention, and vice versa.

The eyeglasses according to the first aspect of the invention are very suitable for performing the method steps according to the third aspect of the invention. The remarks set forth above in relation to the eyeglasses are therefore equally applicable in relation to the method.

### Brief description of the drawings

Embodiments of the invention will now be further described with reference to the drawings, in which:
Figs. 1 and 2 illustrate different views of an unassembled embodiment of eyeglasses,
Figs. 3-5 illustrate details of an embodiment of eyeglasses,
Figs. 6 and 7 illustrate assembling of an embodiment of eyeglasses,
Figs. 8A-9B illustrate temples for eyeglasses,
Figs. 10A and 10B illustrate movement of a temple relative to a frame,
Fig. 11 illustrates different embodiments of a looking element,
Fig. 12 illustrates a rear view of an embodiment of eyeglasses, and
Fig. 13 illustrates front views of an embodiment of eyeglasses.

### Detailed description of the drawings

It should be understood that the detailed description and specific examples, while indicating embodiments of the invention, are given by way of illustration only, since various changes and modifications within the spirit and scope of the invention will become apparent to those skilled in the art from this detailed description.

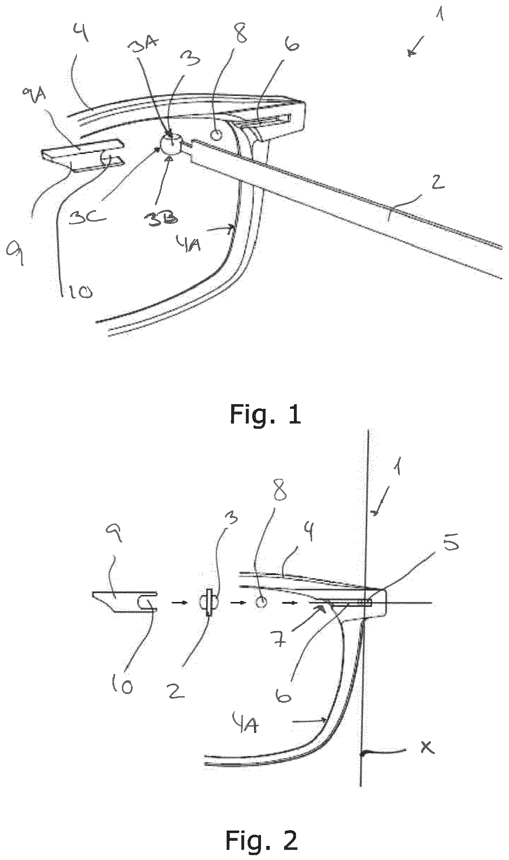

Figs. 1 and 2 illustrate different views of an unassembled embodiment of eyeglasses 1. The eyeglasses 1 comprises two elongated temples 2 (only one is visible) extending from a front end to a rear end and forming an attachment structure 3 at the front end. Furthermore, the eyeglasses 1 comprises an eyeglass frame 4 forming at least one receiving cavity 5 and a slot 6 extending into the cavity thereby forming an opening 7. The slot 6 is configured to guide the attachment structure 3 into the cavity 5.

An inner surface of the cavity 5 and an outer surface of the attachment structure 3 are shaped to establish a geometrical locking forming a hinge-like structure allowing rotation of the attachment structure 3 only about a single axis X of rotation in the cavity 5 (see Fig. 2). In the illustrated embodiment, the axis of rotation is substantially perpendicular to the slot 6.

The opening 7 into the slot 6 is arranged at an edge of the inner surface of the frame; i.e. at the lens side 4A of the frame.

The attachment structure 3 extends between an upper surface 3A and a lower surface 3B, where the upper surface and the lower surface are substantially plane. In the illustrated embodiment, the upper and lower surfaces 3A, 3B are substantially parallel facilitating correct positioning of the attachment structure 3 relative to the opening 7 into the slot 6.

The upper surface 3A and the lower surface 3B are connected by an attachment surface 3C which in the illustrated embodiment is arch-shaped. Thus, the attachment structure 3 forms a barrel-shape or a sphere-like shape with plane upper and lower surfaces.

The eyeglasses 1 further comprises a dampening element 8 insertable into the cavity 5 to thereby dampen movement of the temple 2 relative to the frame 4 by contact between the dampening element 8 and the frame 4 and by contact between the dampening element 8 and the attachment structure 3.

As illustrated by the arrows in Fig. 2, the dampening element 8 is inserted into the cavity 5 before inserting the attachment structure 3 into the cavity in the illustrated embodiment, whereby the dampening structure 8 can be arranged between the rear end of the cavity 5 and the attachment structure 3.

The dampening element 8 is elastically deformable, whereby dampening of the relative movement of the temple 2 and the frame 4 is caused by elastic deformation of the dampening element 8.

The eyeglasses 1 further comprise a locking element 9 insertable into the slot 6 to close the opening 7. When inserting the locking element 9 into the slot 6 to thereby close the opening 7, unwanted separation of the temple 2 and the frame 4 is achieved.

In the illustrated embodiment, the locking element 9 forms an indentation 10 configured for engagement with the attachment structure 3. As illustrated, the shape of the indentation 10 matches the shape of the attachment surface 3C.

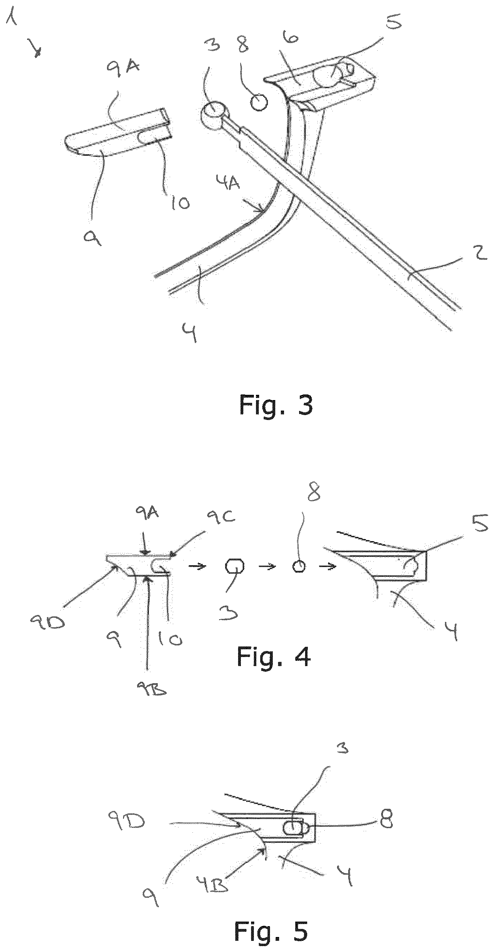

Furthermore, a part of an outer surface of the locking element 9; i.e. the upper surface 9A and the lower surface 9B (see e.g. Fig. 4) match a part of the inner surface of the cavity 5 to allow fixing of the locking element at least partly by frictional forces.

The indentation 10 is formed at a front end 9C of the locking element; i.e. the end which is inserted into the slot 6 as the first part. At the rear end 9D (see Fig. 4), the locking element 9 has a form which matches an edge part 4B (see Fig. 5) of the frame, whereby the locking element 9 ensures a smooth edge part when inserted into the slot 6.

Figs. 3-5 illustrate details of an embodiment of eyeglasses 1. In Figs. 3 and 4, the eyeglasses are unassembled. The arrows in Fig. 4 illustrate the assembling order for the different elements. In the illustrated embodiment, the dampening element 8 is inserted in the slot 6 via the opening 7 to position the dampening element as the first element in the cavity 5. Subsequently, the attachment structure 3 is inserted into the slot 6 and arranged in the cavity 5, thereby attaching the temple 2 to the frame 4. Finally, the locking element 9 is inserted into the slot 6 and thus arranged in the cavity 5 to prevent removal of the temple 2 from the frame 4.

Fig. 5 illustrates a cross section of the attachment structure 3, the dampening element 8, and the locking element 9 arranged in the cavity 5.

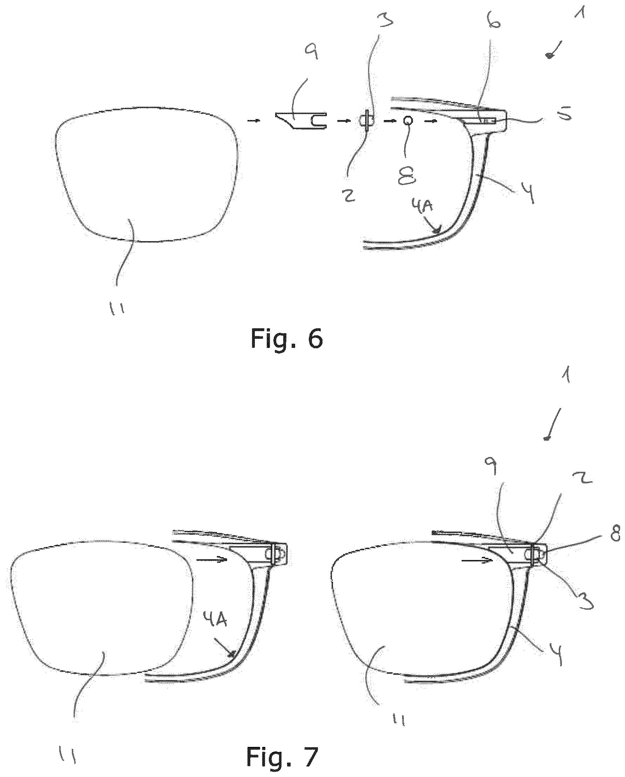

Figs. 6 and 7 illustrate assembling of an embodiment of eyeglasses 1. As also illustrated in Figs. 2 and 4, the assembling order of the illustrated embodiment is: providing a frame, and inserting the dampening element 8, the attachment structure 3, and the locking element 9. Subsequently, the lens 11 is attached to frame 4.

The lens 11 is attached to the frame 4 by inserting is into a groove (not shown) extending along the inner surface of the frame 4A. After mounting of the lens 11, the lens 11 prevents removal of the temple 2. Additionally the lens 11 prevents removal of the locking element 9 and the dampening element 8.

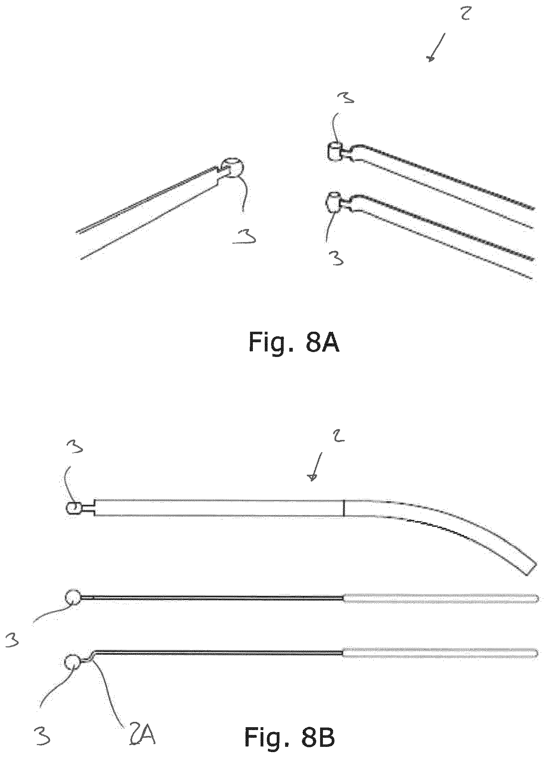

Figs. 8A-9B illustrate different details of temples 2 for eyeglasses 1.

In Fig. 8A, the three temples 2 are flat. The three attachment structures 2 are of different shape, where the left attachment structure 3 forms a sphere-like shape with a plane upper and lower surface, the upper right attachment structure 3 forms a tube-shape, and the lower right attachment structure 3 forms a barrel-shape.

The upper temple 2 of Fig. 8B illustrates a side view of a flat temple 2 with an attachment structure 3 forming a sphere-like shape with a plane upper and lower surface. The centre temple 2 and the lower temple 2 are both flat temples seen from above. The centre temple 2 is substantially straight, whereas the lower temples 2 forms a bend portion 2A close to the attachment structure 3.

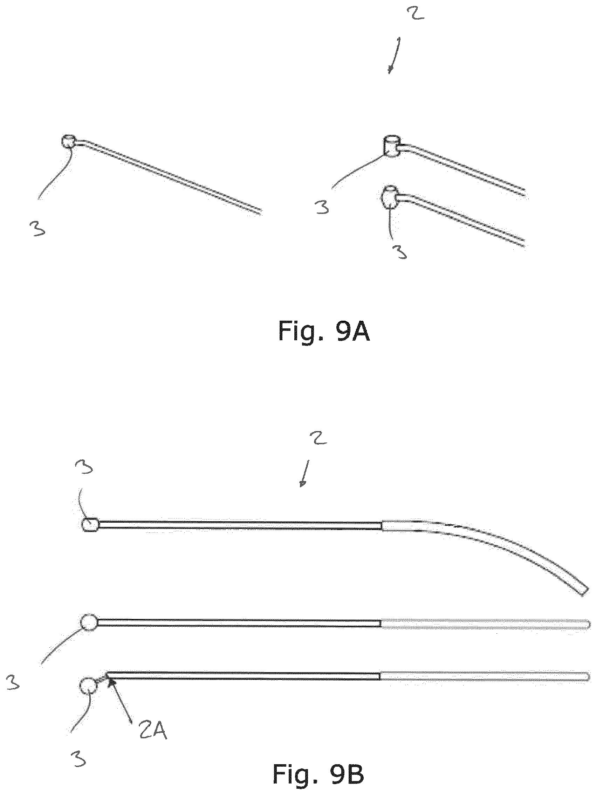

The temples 2 illustrated in Figs. 9A and 9B are similar to the temples 2 illustrated in Figs. 8A and 8B with the exception that the shape of the temple 2 is circular instead of flat.

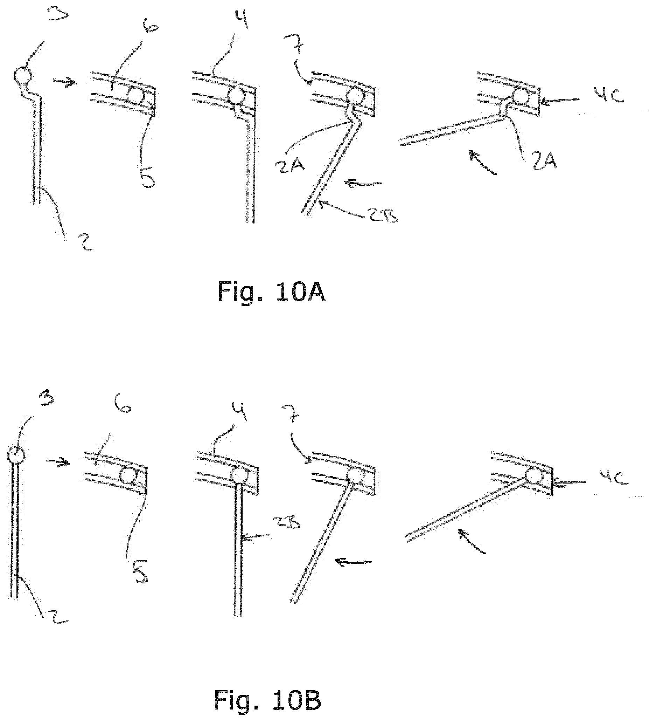

Figs. 10A and 10B illustrate cross-sections of a frame 4 to illustrate movement of a temple 2 relative to a frame 4. The shape of the temple 2 is substantially flat. In Fig. 10A, the temple 2 comprises a bent portion 2A.

The two left figures in Figs. 10A and 10B illustrate insertion of the attachment structure 3 into the slot 6, and thus the cavity 5 via the opening 7. In the centre figures, the attachment structure 3 is in place in the cavity 5, and the temple 2 extends at an angle of approximately 90 degrees relative to the slot 6.

The two right figures in Figs. 10A and 10B illustrate movement of the temple 2 relative to the frame 4 by folding the temple 2 toward the rear surface of the frame 4.

The two centre figures in Figs. 10A and 10B illustrate, that when a bent portion 2A is provided at the temple 2, the outer surface 2B of the temple 2 can be located closer to the outer edge 4C of the frame 4 or even straight with the outer edge 4C of the frame 4.

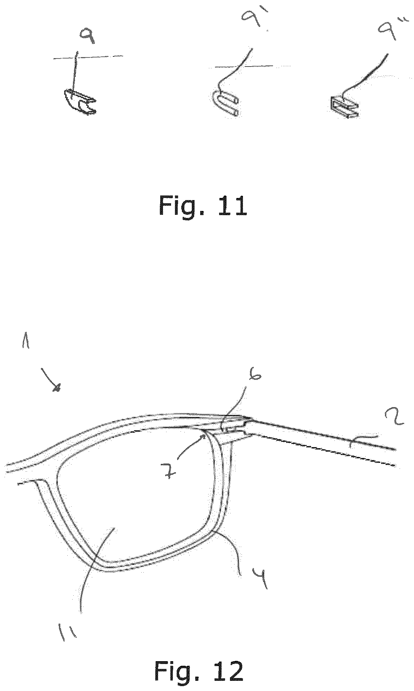

Fig. 11 illustrates different embodiments of a looking element 9. The left locking element 9 is identical to the locking element illustrated in Figs. 1-7. The centre locking element 9' is of a more simple form substantially being a U-shaped tube-like element. The right locking element 9" is also of a more simple form being a bended sheet-material.

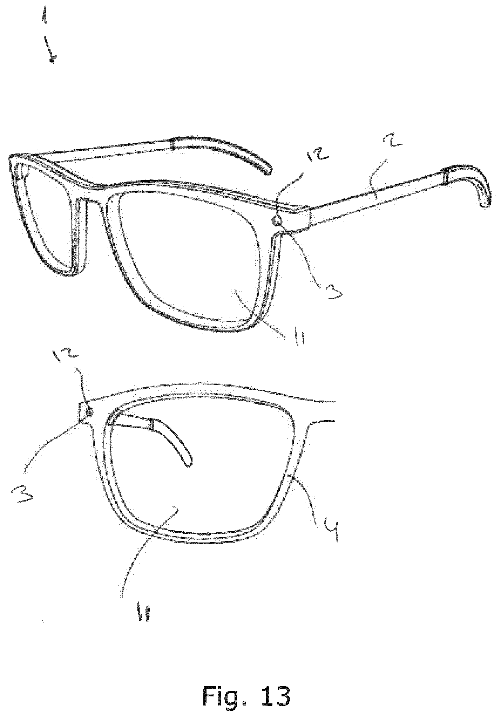

Fig. 12 illustrates a rear view of an embodiment of eyeglasses 1, and Fig. 13 illustrates front views of an embodiment of eyeglasses 1. As illustrated in Fig. 12, the attachment structure 3 and the dampening element 8 are not visible when the eyeglasses 1 are assembled.

The embodiment of the eyeglasses 1 illustrated in Fig. 13 comprises additional openings 12 located in the area of the rear end of the cavity 5. Thereby, it is possible to see the attachment structure 3 from the outside of the frame 4, when the attachment structure 3 is inserted into the cavity 5 and the eyeglasses 1 are assembled.

## Claims

1. Eyeglasses comprising:
- at least one elongated temple extending from a front end to a rear end and forming an attachment structure at the front end, and
- an eyeglass frame forming at least one receiving cavity and a slot extending into the cavity thereby forming an opening;
wherein the slot is configured to guide the attachment structure into the cavity, and wherein an inner surface of the cavity and an outer surface of the attachment structure are shaped to establish a geometrical locking forming a hinge-like structure allowing rotation of the attachment structure only about a single axis of rotation in the cavity.

2. Eyeglasses according to claim 1, wherein the axis of rotation is substantially perpendicular to the slot.

3. Eyeglasses according to claim 1 or 2, wherein the attachment structure is symmetrical around at least one axis.

4. Eyeglasses according to any of the preceding claims, wherein the outer surface is an uninterrupted surface.

5. Eyeglasses according to any of the preceding claims, wherein the attachment structure is solid.

6. Eyeglasses according to any of the preceding claims, wherein the attachment structure extends between an upper surface and a lower surface, the upper surface and the lower surface being substantially plane.

7. Eyeglasses according to claim 6, wherein the upper surface and the lower surface are connected by an attachment surface being arch-shaped, straight, or being formed by a plurality of straight surfaces, a plurality of arch-shaped surfaces, or being formed by a combination hereof.

8. Eyeglasses according to any of the preceding claims, further comprising a dampening element insertable into the cavity to thereby dampen movement of the temple relative to the frame by contact between the dampening element and the frame and by contact between the dampening element and the attachment structure.

9. Eyeglasses according to claim 8, wherein the dampening element is elastically deformable, and wherein dampening of the relative movement of the temple and the frame is caused by elastic deformation of the dampening element.

10. Eyeglasses according to any of the preceding claims, further comprising a locking element insertable into the slot to close the opening.

11. Eyeglasses according to claim 10, wherein the locking element forms an indentation configured for engagement with the attachment structure.

12. Eyeglasses according to claim 7 and 11, wherein a shape of the indentation matches a shape of the attachment surface.

13. Eyeglasses according to any of the preceding claims, further comprising a lens, wherein the lens prevents removal of the temple, when inserted into the frame.

14. A method of assembling eyeglasses according to any of the preceding claims, the method comprising the steps of:
- providing at least one elongated temple extending from a front end to a rear end and forming an attachment structure at the front end,
- providing an eyeglass frame forming at least one receiving cavity and a slot extending into the cavity thereby forming an opening,
- inserting the attachment structure in the cavity through the slot,
- guiding the attachment structure via the slot into the cavity, and
- establishing a geometrical locking forming a hinge-like structure between an inner surface of the cavity and an outer surface of the attachment structure to allow rotation of the attachment structure only about a single axis of rotation in the cavity.
